# EUROPEAN PATENT APPLICATION

(11) **EP 4 245 780 A1**
(43) Date of publication of application: **20.09.2023**
(21) Application number: 21891585.8
(22) Date of filing: 14.10.2021
(51) Int. Cl.: C08F 214/18, C09K 3/18

(54) **WATER REPELLENT OIL REPELLENT AGENT COMPOSITION, METHOD FOR PRODUCING SAME AND ARTICLE**

(30) Priority: 16.11.2020 JP 2020190220
(71) Applicant: AGC INC., Chiyoda-ku, Tokyo 1008405 (JP)
(72) Inventor: KAMIJO, Yuzuka, Tokyo 100-8405 (JP); HARA, Hiroyuki, Tokyo 100-8405 (JP)
(74) Representative: Müller-Boré & Partner Patentanwälte PartG mbB
(86) International application number: PCT/JP2021/038120
(87) International publication number: WO 2022/102338

(57) **Abstract**

Provided is a water repellent oil repellent agent composition capable of producing an article having excellent oil repellency. A water repellent oil repellent agent composition containing a fluorine-containing polymer comprising a unit based on a monomer (a) shown below and a unit based on a monomer (b) shown below.
Monomer (a): a compound represented by CH₂=CH-[CH₂CH₂]ₚ-[CF₂CF₂]_{q}-[OCF₂CF(CF₃)]ᵣ-O-C₃F₇
In the formula, p represents an integer of 0 to 4, q represents an integer of 1 to 4, and r represents an integer of 1 to 4.
Monomer (b): another monomer that is copolymerizable with the monomer (a).

## Description

### [Technical Field]

The present invention relates to a water repellent oil repellent agent composition, a method for producing the composition, and an article that uses the composition.

### [Background Art]

Examples of known methods for imparting water repellency and oil repellency to the surfaces of articles such as textile products include methods in which the article is treated with a water repellent oil repellent agent composition containing a fluorine-containing polymer having units based on a (perfluoroalkyl)ethylene (Patent Document 1).

### [Citation List]

### [Patent Document]

[Patent Document 1]
International Patent Application No. WO 2019/138680

### [Summary of Invention]

### [Technical Problem]

However, investigations by the inventors of the present invention revealed that articles treated with the water repellent oil repellent agent composition containing a fluorine-containing polymer disclosed in Patent Document 1 sometimes exhibit insufficient oil repellency.

The present invention provides a water repellent oil repellent agent composition capable of producing an article having excellent oil repellency, a method for producing the composition, and an article having excellent oil repellency.

### [Solution to Problem]

The present invention has the following aspects.
[1] A water repellent oil repellent agent composition containing a fluorine-containing polymer comprising a unit based on a monomer (a) shown below and a unit based on a monomer (b) shown below.
   Monomer (a): a compound represented by formula (1) shown below.

      CH₂=CH-[CH₂CH₂]ₚ-[CF₂CF₂]_{q}-[OCF₂CF(CF₃)]ᵣ-O-C₃F₇ (1)
   In the formula, p represents an integer of 0 to 4, q represents an integer of 1 to 4, and r represents an integer of 1 to 4.
   Monomer (b): another monomer that is copolymerizable with the monomer (a).
[2] The water repellent oil repellent agent composition according to [1] above, wherein the unit based on the monomer (b) includes a unit based on a monomer (b1) shown below.
   Monomer (b1): a compound with a molecular weight of 45 to 350, represented by formula (2) or formula (3) shown below.

      CH₂=CH-Q (2)

      CH₂=CHCH₂-Q (3)
   In the formulas, Q represents a halogen atom, or an organic group in which the bonding terminal atom bonded to the CH₂=CH- or the CH₂=CHCH₂- is an oxygen atom, a nitrogen atom, or a sulfur atom.
[3] The water repellent oil repellent agent composition according to [2] above, wherein the monomer (b1) is a vinyl carboxylate ester, allyl carboxylate ester, alkyl vinyl ether, alkyl allyl ether, hydroxyalkyl vinyl ether, hydroxyalkyl allyl ether, vinyl halide, or allyl halide.
[4] The water repellent oil repellent agent composition according to [2] or [3] above, wherein the unit based on the monomer (b1) includes a unit based on a vinyl carboxylate ester having an alkyl group of 1 to 8 carbon atoms.
[5] The water repellent oil repellent agent composition according to [4] above, wherein a proportion of the unit based on the vinyl carboxylate ester having an alkyl group of 1 to 8 carbon atoms, relative to all of the units that constitute the fluorine-containing polymer, is within a range from 1 to 70% by mass.
[6] The water repellent oil repellent agent composition according to any one of [2] to [5] above, wherein the unit based on the monomer (b1) includes a unit based on a vinyl carboxylate ester having an alkyl group of 12 to 30 carbon atoms.
[7] The water repellent oil repellent agent composition according to any one of [2] to [6] above, wherein
   the unit based on the monomer (b1) includes a unit based on a vinyl carboxylate ester having an alkyl group of 1 to 8 carbon atoms, and a unit based on a vinyl carboxylate ester having an alkyl group of 12 to 30 carbon atoms, and
   relative to all of the units that constitute the fluorine-containing polymer, a proportion of the unit based on the vinyl carboxylate ester having an alkyl group of 1 to 8 carbon atoms is within a range from 1 to 25% by mass, and a proportion of the unit based on the vinyl carboxylate ester having an alkyl group of 12 to 30 carbon atoms is within a range from 19 to 74% by mass.
[8] The water repellent oil repellent agent composition according to any one of [1] to [7] above, wherein a proportion of the unit based on the monomer (a), relative to all of the units that constitute the fluorine-containing polymer, is within a range from 25 to 80% by mass.
[9] A method for producing a water repellent oil repellent agent composition, the method including polymerizing a monomer component containing a monomer (a) described below and a monomer (b) described below in the presence of a polymerization initiator.
   Monomer (a): a compound represented by formula (1) shown below.

      CH₂=CH-[CH₂CH₂]ₚ-[CF₂CF₂]_{q}-[OCF₂CF(CF₃)]ᵣ-O-C₃F₇ (1)
   In the formula, p represents an integer of 0 to 4, q represents an integer of 1 to 4, and r represents an integer of 1 to 4.
   Monomer (b): another monomer that is copolymerizable with the monomer (a).
[10] The method for producing a water repellent oil repellent agent composition according to [9] above, wherein a proportion of the monomer (a) relative to the entire monomer component is within a range from 25 to 80% by mass.
[11] An article that has been treated with the water repellent oil repellent agent composition according to any one of [1] to [8] above.

### [Advantageous Effects of Invention]

According to the water repellent oil repellent agent composition of the present invention, an article having excellent oil repellency can be obtained.

According to the method for producing a water repellent oil repellent agent composition of the present invention, a water repellent oil repellent agent composition can be produced that is capable of yielding an article having excellent oil repellency.

An article of the present invention has excellent oil repellency.

### [Description of Embodiments]

The meanings and definitions of terms used in the present invention are described below.

A "unit based on a monomer" is a generic term for a group of atoms formed directly as a result of polymerization of one molecule of the monomer, and atom groupings obtained by chemically modifying a portion of that group of atoms.

The term "(meth)acrylate" is a generic term for both acrylate and methacrylate. Similarly, a "(meth)acryloyloxy group" is a generic term for an acryloyloxy group and a methacryloyloxy group.

The number average molecular weight (hereinafter also abbreviated as "Mn") and the weight average molecular weight (hereinafter also abbreviated as "Mw") of a polymer are polymethyl methacrylate-equivalent molecular weights measured by gel permeation chromatography (hereinafter also abbreviated as "GPC") using a calibration curve created using standard polymethyl methacrylate samples.

Solid mass concentrations are calculated as (solid mass / sample mass) × 100, wherein the mass of a sample prior to heating is deemed the sample mass, and the mass following drying of the sample for four hours in a 120°C convection dryer is deemed the solid mass.

Numerical ranges specified using the expression "a to b" mean a range that includes the numerical values before and after the "to" as the lower limit value and the upper limit value respectively.

### [Water Repellent Oil Repellent Agent Composition]

The water repellent oil repellent agent composition of the present invention (hereinafter also referred to as the "composition of the invention") contains a specific fluorine-containing polymer (hereinafter also referred to as the "polymer (A)").

The composition of the invention typically contains the polymer (A) and a medium. Examples of the medium include aqueous media and organic solvents, and an aqueous medium is preferred.

The composition of the invention may also contain a surfactant, if necessary.

The composition of the invention may also contain one or more other components, if necessary.

The composition of the present invention is preferably a dispersion (hereinafter also referred to as a "fluorine-containing polymer dispersion") containing the polymer (A), an aqueous medium and a surfactant. The fluorine-containing polymer dispersion includes dispersions obtained using the production method described below, as well as dispersions obtained by further diluting such a produced dispersion with an arbitrary aqueous medium in order to facilitate treatment of an article.

### (Polymer (A))

The polymer (A) comprises a unit based on a monomer (a) (hereinafter also referred to as the "unit (a)") and a unit based on a monomer (b) (hereinafter also referred to as the "unit (b)").

Monomer (a): a compound represented by formula (1) shown below.

CH₂=CH-[CH₂CH₂]ₚ-[CF₂CF₂]_{q}-[OCF₂CF(CF₃)]ᵣ-O-C₃F₇ (1)

In the formula, p represents an integer of 0 to 4, q represents an integer of 1 to 4, and r represents an integer of 1 to 4.

Monomer (b): another monomer that is copolymerizable with the monomer (a).

In the monomer (a), p is preferably 0.

Further, q is preferably 1.

Moreover, r is preferably 1.

Examples of the monomer (a) include CH₂=CH-CF₂CF₂-OCF₂CF(CF₃)-O-C₃F₇, CH₂=CH-CH₂CH₂-CF₂CF₂-OCF₂CF(CF₃)-O-C₃F₇, CH₂=CH-CF₂CF₂-[OCF₂CF(CF₃)]₂-O-C₃F₇, and CH₂=CH-CF₂CF₂-[OCF₂CF(CF₃)]₃-O-C₃F₇.

The monomer (a) is preferably CH₂=CH-CF₂CF₂-OCF₂CF(CF₃)-O-C₃F₇ or CH₂=CH-CF₂CF₂-[OCF₂CF(CF₃)]₂-O-C₃F₇, and is more preferably CH₂=CH-CF₂CF₂-OCF₂CF(CF₃)-O-C₃F₇.

A combination of two or more types of the monomer (a) may also be used.

The monomer (b) may be any monomer that is copolymerizable with the monomer (a).

In terms of ease of copolymerization with the monomer (a), at least a portion of the monomer (b) is preferably a monomer (b1).

Monomer (b1): a compound with a molecular weight of 45 to 350, represented by formula (2) or formula (3) shown below.

CH₂=CH-Q (2)

CH₂=CHCH₂-Q (3)

In the formulas, Q represents a halogen atom, or an organic group in which the bonding terminal atom bonded to the CH₂=CH- or the CH₂=CHCH₂- is an oxygen atom, a nitrogen atom, or a sulfur atom.

The molecular weight of the monomer (b1) refers to the Mn value obtained by GPC measurement in the case of a compound for which a molecular weight distribution can be obtained by GPC measurement, and refers to the formula weight calculated from the structural formula in the case of a compound for which a molecular weight distribution cannot be obtained by GPC measurement.

In terms of increasing the mole fraction of the monomer (b1) without overly reducing the mass fraction of the monomer (a), the molecular weight of the monomer (b1) is preferably within a range from 50 to 300, and more preferably from 55 to 150.

The above halogen atom is preferably a chlorine tom or a fluorine atom.

Examples of the aforementioned organic group in which the bonding terminal atom is an oxygen atom, a nitrogen atom, or a sulfur atom include -OR⁴, -OC(=O)R⁴, - NHR⁴, -NR⁴R5, -SR⁴, and nitrogen-containing heterocyclic groups in which the nitrogen atom that constitutes part of the ring is the bonding terminal atom. R⁴ and R⁵ each independently represent an alkyl group, a cycloalkyl group, an aryl group, or a heterocyclic group. The number of carbon atoms in the alkyl group is, for example, within a range from 1 to 30.

In those cases where R⁴ in -OR⁴, -OC(=O)R⁴ is an alkyl group, the number of carbon atoms in R⁴ is preferably within a range from 1 to 22, and more preferably from 1 to 18. A number of carbon atoms that falls within this range is preferred in terms of the ease of copolymerization with the monomer (a), and in terms of achieving favorable adhesiveness to substrates.

In those cases where R⁴ or R⁵ in -NHR⁴, -NR⁴R⁵, -SR⁴ is an alkyl group, the number of carbon atoms in each group is preferably within a range from 1 to 8, and more preferably from 1 to 6. A number of carbon atoms that falls within this range is preferred in terms of the ease of copolymerization with the monomer (a), and in terms of achieving favorable adhesiveness to substrates.

The number of carbon atoms forming the ring in the aforementioned cycloalkyl group is, for example, within a range from 3 to 8.

The number of atoms forming the above heterocyclic group is, for example, within a range from 5 to 14. The heterocyclic group may be a group that is based on a polycyclic compound.

The above organic group may have a reactive group or a halogen atom. The reactive group describes a group described below in detail in the section relating to a monomer (b1-3). A hydroxyl group is preferred as the reactive group. Further, the organic group may have a linking group such as an etheric oxygen atom, a carbonyloxy group or a carbonyl group at a portion other than the aforementioned bonding terminal. Moreover, the organic group may also have a polymerizable carbon-carbon double bond, but preferably does not have such a double bond.

In terms of the ease of copolymerization with the monomer (a) and achieving favorable adhesiveness to substrates, Q is preferably a halogen atom, -OR⁴ or - OC(=O)R⁴, and is more preferably a fluorine atom, a chlorine atom or -OC(=O)R⁴, wherein R⁴ is as defined above.

Vinyl carboxylate esters, vinyl ether compounds and vinyl halides are preferred as the compound represented by formula (2).

In the vinyl carboxylate ester compound, the number of carbon atoms in the acyl group is preferably within a range from 2 to 31, more preferably from 2 to 23, particularly preferably from 2 to 19, and most preferably from 2 to 9. This number of carbon atoms in the acyl group includes the carbon atom of the carbonyl group.

Examples of the vinyl carboxylate ester compounds include vinyl acetate, vinyl butyrate, vinyl pivalate, vinyl caproate, vinyl caprylate, vinyl laurate, vinyl stearate, vinyl benzoate, vinyl chloroacetate and divinyl adipate.

Examples of the above vinyl ethers include methyl vinyl ether, ethyl vinyl ether, n-butyl vinyl ether, iso-butyl vinyl ether, tert-butyl vinyl ether, 2-hydroxyethyl vinyl ether, 4-hydroxybutyl vinyl ether, stearyl vinyl ether, chloromethyl vinyl ether, 2-chloroethyl vinyl ether, chloropropyl vinyl ether, cyclohexyl vinyl ether, ethylene glycol monovinyl ether, and diethylene glycol monovinyl ether.

Alkyl vinyl ethers and hydroxyalkyl vinyl ethers are preferred as the vinyl ether. The number of carbon atoms in the alkyl group or hydroxyalkyl group in the alkyl vinyl ether or hydroxyalkyl vinyl ether is preferably within a range from 2 to 6.

Examples of the above vinyl halide include vinyl chloride and vinyl fluoride.

For the compound represented by formula (3), allyl carboxylate esters, allyl ethers and allyl halides are preferred.

In the allyl carboxylate ester compound, the number of carbon atoms in the acyl group is preferably within a range from 2 to 31, more preferably from 2 to 23, particularly preferably from 2 to 19, and most preferably from 2 to 9. This number of carbon atoms in the acyl group includes the carbon atom of the carbonyl group.

Examples of the allyl carboxylate ester compounds include allyl acetate and diallyl adipate.

Alkyl allyl ethers and hydroxyalkyl allyl ethers are preferred as the allyl ether.

The number of carbon atoms in the alkyl group or hydroxyalkyl group in the alkyl allyl ether or hydroxyalkyl allyl ether is preferably within a range from 2 to 6. Examples of the allyl ethers include allyl ethyl ether, diallyl ether, diethylene glycol diallyl ether, 1,3-diallyloxy-2-propanol, polyoxyethylene monoallyl ethers (such as diethylene glycol monoallyl ether and tetraethylene glycol monoallyl ether), ethylene glycol monoallyl ether, propylene glycol monoallyl ether.

Examples of the above allyl halides include allyl chloride and allyl fluoride.

Other examples of compounds represented by formula (2) or (3) include N-vinylpyrrolidone, N-vinyl-ε-caprolactam, and ethyl vinyl sulfide.

In those cases where a combination of two or more types of either one or both of the vinyl carboxylate ester represented by formula (2) and the allyl carboxylate ester represented by formula (3) are used, combinations of a vinyl carboxylate ester or allyl carboxylate ester having an acyl group of 2 to 9 carbon atoms and a vinyl carboxylate ester or allyl carboxylate ester having an acyl group of 13 to 31 carbon atoms are preferred, and combinations of a vinyl carboxylate ester having an acyl group of 2 to 9 carbon atoms and a vinyl carboxylate ester having an acyl group of 13 to 31 carbon atoms are more preferred. These numbers of carbon atoms in the acyl group include the carbon atom of the carbonyl group.

In terms of exhibiting good copolymerizability with the monomer (a), and achieving even more superior oil repellency for an article treated with the composition of the invention, the monomer (b1) is preferably a vinyl carboxylate ester, allyl carboxylate ester, alkyl vinyl ether, alkyl allyl ether, hydroxyalkyl vinyl ether, hydroxyalkyl allyl ether, vinyl halide or ally halide, and is more preferably a vinyl carboxylate ester.

For the monomer (b1), in terms of achieving more superior water repellency and laundering durability of that water repellency for an article treated with the composition of the invention, vinyl carboxylate esters having an alkyl group of 1 to 8 carbon atoms (hereinafter also referred to as the "monomer (b1-1)"), and vinyl carboxylate esters having an alkyl group of 12 to 30 carbon atoms (hereinafter also referred to as the "monomer (b1-2)") are preferred.

The monomer (b1-1) and the monomer (b1-2) do not have a reactive group described below.

The monomer (b1-1) and the monomer (b1-2) may each be used alone, or a combination may be used. Further, one or both of the monomer (b1-1) and the monomer (b1-2) may also be used in combination with a monomer (b1) other than the monomer (b1-1) and the monomer (b1-2).

Examples of the monomer (b1-1) include compounds represented by formula (4) shown below.

CH₂=CH-O-C(=O)-R¹ (4)

In the formula, R¹ represents an alkyl group of 1 to 8 carbon atoms.

Provided the number of carbon atoms in R¹ is 8 or fewer, an article treated with the composition of the invention exhibits excellent water repellency and laundering durability of that water repellency. The number of carbon atoms in R¹ is preferably 3 or fewer, and one carbon atom is particularly preferred. R¹ is preferably a linear group.

Examples of the monomer (b1-1) include vinyl acetate, vinyl propionate, vinyl butyrate, vinyl pivalate, vinyl caproate and vinyl caprylate.

Vinyl carboxylate esters in which R¹ has 1 to 4 carbon atoms are preferred as the monomer (b1-1), and more specifically, vinyl acetate is preferred.

Combinations of two or more types of the monomer (b 1-1) may also be used.

Examples of the monomer (b1-2) include compounds represented by formula (5) shown below.

CH₂=CH-O-C(=O)-R² (5)

In the formula, R² represents an alkyl group of 12 to 30 carbon atoms.

Provided the number of carbon atoms in R² is 12 or greater, an article treated with the composition of the invention exhibits excellent laundering durability of the water repellency, and excellent oil repellency. Provided the number of carbon atoms in R² is 30 or fewer, the monomer (b1-2) is more readily available and exhibits superior handling characteristics. The number of carbon atoms in R² is preferably 15 or greater, and more preferably 18 or greater. Further, the number of carbon atoms in R² is preferably 28 or fewer, and more preferably 22 or fewer. R² is preferably a linear group.

Examples of the monomer (b1-2) include vinyl carboxylate esters in which the number of carbon atoms in R² is within a range from 12 to 24, and specific examples include vinyl myristate, vinyl palmitate, vinyl stearate and vinyl oleate.

The monomer (b1-2) is preferably a vinyl carboxylate ester in which the number of carbon atoms in R² is within a range from 12 to 22, and specifically, vinyl stearate is preferred.

Combinations of two or more types of the monomer (b1-2) may also be used.

The monomer (b1) other than the monomer (b1-1) and the monomer (b1-2) is preferably a monomer having a reactive group (hereinafter also referred to as the "monomer (b1 -3)"). The reactive group in the monomer (b1-3) is a group that can react with another functional group (another reactive group, the functional group of a crosslinking agent optionally included in the composition of the invention, or a functional group that exists at the surface of the article being treated by the composition of the invention or the like) to form a crosslinked structure. By using the monomer (b1-3), a reactive group can be introduced into the polymer (A). If the polymer (A) has a reactive group, then because the polymer can form crosslinked structures by reaction of the reactive group with other functional groups, the laundering durability of the water repellency and oil repellency can be further improved.

Examples of the above reactive group include a hydroxyl group, epoxy group, amino group, monoalkylamino group or dialkylamino group having an alkyl group of 1 to 4 carbon atoms, carboxyl group, isocyanate group, oxazolinyl group, and carbodiimide group. In terms of the monomer (bl-3) being readily available and having superior handling characteristics, the reactive group is preferably a hydroxyl group, epoxy group or amino group, and a hydroxyl group is particularly preferred.

Examples of the monomer (bl-3) include the compounds described below, in which Q in the above formula (2) or (3) is an organic group having the above reactive group. In terms of providing superior polymerizability, the organic group having the reactive group preferably does not have a polymerizable carbon-carbon double bond. The organic group having the reactive group is preferably a hydroxyalkyl group, and is more preferably a hydroxyalkyl group of 2 to 6 carbon atoms.

Examples of the monomer (bl-3) include vinyl ethers, including vinyl ether having a hydroxyl group such as 2-hydroxyethyl vinyl ether, 3-hydroxypropyl vinyl ether, 4-hydroxybutyl vinyl ether, diethylene glycol monovinyl ether and cyclohexanedimethanol monovinyl ether, and glycidyl vinyl ether; and allyl ethers, including allyl ethers having a hydroxyl group such as ethylene glycol monoallyl ether, diethylene glycol allyl ether, glycerol monoallyl ether, pentaerythritol triallyl ether and trimethylolpropane diallyl ether, and glycidyl allyl ether.

Among these compounds, vinyl ethers having a hydroxyl group and allyl ethers having a hydroxyl group are preferred, and 4-hydroxybutyl vinyl ether, diethylene glycol monovinyl ether, cyclohexanedimethanol monovinyl ether, and ethylene glycol monoallyl ether are more preferred.

Combinations of two or more types of the monomer (bl-3) may also be used.

At least a portion of the monomer (b) may be a monomer (b) other than the monomer (b1) (hereinafter also referred to as the "monomer (b2)").

Examples of the monomer (b2) include olefins, halogenated olefins other than vinyl halides, alkyl (meth)acrylates, hydroxyalkyl (meth)acrylates, fluoroalkyl (meth)acrylates, and perfluoro(alkyl vinyl ethers). Specific examples include ethylene, propylene, vinylidene chloride, vinylidene fluoride, tetrafluoroethylene, CH₂=CH-R^{f} (wherein R^{f} represents a perfluoroalkyl group of 1 to 8 carbon atoms), methyl (meth)acrylate, ethyl (meth)acrylate, stearyl (meth)acrylate, behenyl (meth)acrylate, isobornyl (meth)acrylate, 2-hydroxyethyl (meth)acrylate, 2-[(3,5-dimethylpyrazolyl)carbonylamino]ethyl (meth)acrylate, N-methylolacrylamide, 2-perfluorohexylethyl (meth)acrylate, CF₂=CFOCF₃, CF₂=CFOCF₂CF₃, CF₂=CFOCF₂CF₂CF₃, CF₂=CFOCF₂CF₂CF₂CF₃, and CF₂=CFOCF₂CF(CF₃)OCF₂CF₂CF₃.

A (meth)acrylate is preferred as the monomer (b2).

However, in terms of enabling an article to be obtained which is resistant to any deterioration in the water repellency and oil repellency in the presence of alkali or the like, the polymer (A) preferably does not have any units based on (meth)acrylates having a perfluoroalkyl group. The ester linkage in a unit based on a (meth)acrylate having a perfluoroalkyl group is prone to cleavage by hydrolysis in the presence of alkali or the like. If this ester linkage is cleaved, then the perfluoroalkyl group is lost from the polymer, and the water repellency and oil repellency of the article may sometimes deteriorate.

Accordingly, the monomer (b2) is preferably a (meth)acrylate containing no fluorine atoms. Examples of (meth)acrylates containing no fluorine atoms include methyl (meth)acrylate, n-butyl (meth)acrylate, tert-butyl (meth)acrylate, 2-hydroxyethyl (meth)acrylate, lauryl (meth)acrylate, stearyl (meth)acrylate, and behenyl (meth)acrylate. In terms of lowering the glass transition temperature of the polymer (A) and improving the film formability, n-butyl (meth)acrylate and 2-hydroxyethyl (meth)acrylate are preferred, whereas in terms of achieving favorable texture in those cases where the article is a textile product and improving the water repellency, lauryl (meth)acrylate, stearyl (meth)acrylate and behenyl (meth)acrylate are preferred.

The polymer (A) is preferably a polymer in which at least a portion of the unit (b) is a unit based on the monomer (b1) (hereinafter also referred to as the "monomer (b1) unit"). Examples of polymers in which at least a portion of the unit (b) is a monomer (b1) unit include polymers having only the monomer (b1) unit as the unit (b), and polymers having the monomer (b1) unit and a unit based on the monomer (b2) (hereinafter also referred to as the "monomer (b2) unit").

The polymer (A) may have two or more types of the monomer (b1) unit. In those cases where the polymer (A) has a monomer (b2) unit, the polymer may have two or more types of the monomer (b2) unit.

The monomer (b1) unit preferably includes either one or both of a unit based on the monomer (b1-1) (hereinafter also referred to as the "monomer (b1-1) unit") and a unit based on the monomer (b1-2) (hereinafter also referred to as the "monomer (b1-2) unit"), and more preferably either contains only a monomer (b1-1) unit or contains both a monomer (b1-1) unit and a monomer (b1-2) unit.

The proportion of the unit (a) relative to all of the units that constitute the polymer (A) is preferably within a range from 25 to 80% by mass, more preferably from 30 to 75% by mass, even more preferably from 34 to 74% by mass, and particularly preferably from 35 to 73% by mass. Provided the proportion of the unit (a) is at least as large as the above lower limit, the oil repellency of an article obtained using the composition of the invention is more superior, whereas provided the proportion is not greater than the above upper limit, the conversion rate in the polymerization reaction of the polymer (A) is more likely to increase further.

The proportion of the unit (b) relative to all of the units that constitute the polymer (A) is preferably within a range from 20 to 75% by mass, more preferably from 25 to 70% by mass, even more preferably from 26 to 66% by mass, and particularly preferably from 27 to 65% by mass. Provided the proportion of the unit (b) is at least as large as the above lower limit, the conversion rate in the polymerization reaction of the polymer (A) is more likely to increase further, whereas provided the proportion is not greater than the above upper limit, the oil repellency of an article obtained using the composition of the invention is more superior.

In those cases where at least a portion of the unit (b) is composed of a monomer (b1) unit, the proportion of the monomer (b1) unit relative to all of the units that constitute the polymer (A) is preferably within a range from 20 to 75% by mass, more preferably from 25 to 70% by mass, even more preferably from 26 to 66% by mass, and particularly preferably from 27 to 65% by mass. Provided the proportion of the monomer (b1) unit is at least as large as the above lower limit, the conversion rate in the polymerization reaction of the polymer (A) is more likely to increase further, whereas provided the proportion is not greater than the above upper limit, the oil repellency of an article obtained using the composition of the invention is more superior.

In those cases where the monomer (b1) unit includes a monomer (b1-1) unit, the proportion of the monomer (b1-1) unit relative to all of the units that constitute the polymer (A) is preferably within a range from 1 to 70% by mass, more preferably from 1.5 to 60% by mass, even more preferably from 2 to 55% by mass, and particularly preferably from 2.5 to 50% by mass. Provided the proportion of the monomer (b1-1) unit is at least as large as the above lower limit, the conversion rate in the polymerization reaction of the polymer (A) is more likely to increase further, whereas provided the proportion is not greater than the above upper limit, the oil repellency and the laundering durability of the water repellency of an article obtained using the composition of the invention are more superior.

In those cases where the unit based on the monomer (b1) includes a monomer (b1-2) unit, the proportion of the monomer (b1-2) unit relative to all of the units that constitute the polymer (A) is preferably within a range from 19 to 74% by mass, more preferably from 23.5 to 68.5% by mass, even more preferably from 24 to 64% by mass, and particularly preferably from 24.5 to 62.5% by mass. Provided the proportion of the monomer (b1-2) unit is at least as large as the above lower limit, the laundering durability of the water repellency of an article obtained using the composition of the invention is more superior, whereas provided the proportion is not greater than the above upper limit, crystallinity of the polymer (A) is suppressed, and the dispersion stability of the dispersion of the polymer (A) is more superior.

In those cases where the unit based on the monomer (b1) includes a monomer (b1-1) unit and a monomer (b1-2) unit, the proportion of the combined total of the monomer (b1-1) unit and the monomer (b1-2) unit relative to all of the units that constitute the polymer (A) is preferably within a range from 20 to 75% by mass, more preferably from 25 to 70% by mass, even more preferably from 26 to 66% by mass, and particularly preferably from 27 to 65% by mass.

In such cases, the proportion of the monomer (b1-1) unit relative to all of the units that constitute the polymer (A) is preferably within a range from 1 to 25% by mass, more preferably from 1.5 to 20% by mass, even more preferably from 2 to 15% by mass, and particularly preferably from 2.5 to 10% by mass. Provided the proportion of the monomer (b1-1) unit is at least as large as the above lower limit, the conversion rate in the polymerization reaction is more likely to increase further, whereas provided the proportion is not greater than the above upper limit, the oil repellency and the laundering durability of the water repellency of an article obtained using the composition of the invention are more superior. Further, the proportion of the monomer (b1-2) unit relative to all of the units that constitute the polymer (A) is preferably within a range from 19 to 74% by mass, more preferably from 23.5 to 68.5% by mass, even more preferably from 24 to 64% by mass, and particularly preferably from 24.5 to 62.5% by mass. Provided the proportion of the monomer (b1-2) unit is at least as large as the above lower limit, the laundering durability of the water repellency of an article obtained using the composition of the invention is more superior, whereas provided the proportion is not greater than the above upper limit, crystallinity of the polymer (A) is suppressed, and the dispersion stability of the dispersion of the polymer (A) is more superior.

The above upper limits and lower limits may be arbitrarily combined as appropriate. For example, relative to all of the units that constitute the polymer (A), the proportion of the monomer (b1-1) unit may be within a range from 1 to 25% by mass, with the proportion of the monomer (b1-2) unit being within a range from 19 to 74% by mass, the proportion of the monomer (b1-1) unit may be within a range from 1.5 to 20% by mass, with the proportion of the monomer (b1-2) unit being within a range from 23.5 to 68.5% by mass, the proportion of the monomer (b1-1) unit may be within a range from 2 to 15% by mass, with the proportion of the monomer (b1-2) unit being within a range from 24 to 64% by mass, or the proportion of the monomer (b1-1) unit may be within a range from 2.5 to 10% by mass, with the proportion of the monomer (b1-2) unit being within a range from 24.5 to 62.5% by mass.

In those cases where the monomer (b1) unit includes a unit based on the monomer (bl-3) (hereinafter also referred to as a "monomer (bl-3) unit"), the proportion of the monomer (bl-3) unit relative to all of the units that constitute the polymer (A) is preferably within a range from 0.5 to 5% by mass, more preferably from 0.8 to 3% by mass, and even more preferably from 0.9 to 2% by mass. Provided the proportion of the monomer (bl-3) unit is at least as large as the above lower limit, the laundering durability of the water repellency of an article obtained using the composition of the invention is more superior, whereas provided the proportion is not greater than the above upper limit, the oil repellency of an article obtained using the composition of the invention is more superior.

The proportion of the monomer (b2) unit relative to all of the units that constitute the polymer (A) is preferably less than 20% by mass, more preferably less than 10% by mass, and may be 0% by mass. Provided the proportion of the monomer (b2) unit is not greater than the above upper limit, an article can be obtained which is more resistant to any deterioration in the water repellency and oil repellency in the presence of alkali or the like.

The proportion of the combined total of the unit (a) and the monomer (b1) unit relative to all of the units that constitute the polymer (A) is preferably at least 80% by mass, more preferably at least 90% by mass, even more preferably at least 95% by mass, and may be 100% by mass. Provided this combined total is at least as large as the above lower limit, an article can be obtained which is more resistant to any deterioration in the water repellency and oil repellency in the presence of alkali or the like.

The proportion of the combined total of the unit (a) and the unit (b) relative to all of the units that constitute the polymer (A) is preferably 100% by mass. In other words, the polymer (A) is preferably composed solely of the unit (a) and the unit (b).

The proportion of each unit can be calculated from ¹H-NMR and the rate of reaction of each unit component as determined by gas chromatography. In those cases where the conversion rate of the monomer component into the polymer (A) is high (for example, 90% or higher) during the production of the polymer (A), the proportion of each unit may also be calculated based on the amount of each monomer component used.

The conversion rate can be determined from the theoretical value for the mass of the polymer (A) calculated from the amounts of the raw materials added during production of the polymer (A), and the actual measured value of the mass of the polymer (A) produced, using the formula: actual measured value / theoretical value × 100.

The Mn value for the polymer (A) is preferably at least 10,000, more preferably at least 11,000, and even more preferably 12,000 or higher. The Mn value for the polymer (A) is preferably not more than 100,000, more preferably not more than 70,000, and even more preferably 50,000 or less. Provided Mn for the polymer (A) is at least as high as the above lower limit, an article treated with a composition of the invention exhibits more superior water repellency and oil repellency. Provided Mn for the polymer (A) is not more than the above upper limit, the polymer (A) exhibits more superior water dispersibility.

The above upper limit and lower limit may be arbitrarily combined as appropriate. For example, Mn for the polymer (A) may be within a range from 10,000 to 100,000, from 11,000 to 70,000, or from 12,000 to 50,000.

The Mw value for the polymer (A) is preferably at least 10,000, more preferably at least 20,000, and even more preferably 25,000 or higher. The Mw value for the polymer (A) is preferably not more than 150,000, more preferably not more than 120,000, and even more preferably 100,000 or less. Provided Mw for the polymer (A) is at least as high as the above lower limit, an article treated with a composition of the invention exhibits more superior water repellency and oil repellency. Provided Mw for the polymer (A) is not more than the above upper limit, the polymer (A) exhibits more superior water dispersibility.

The above upper limit and lower limit may be arbitrarily combined as appropriate. For example, Mw for the polymer (A) may be within a range from 10,000 to 150,000, from 20,000 to 120,000, or from 25,000 to 100,000.

### (Aqueous Medium)

Examples of the aqueous medium include water, and water that contains a water-soluble organic solvent.

A water-soluble organic solvent is an organic solvent that is miscible with water in an arbitrary proportion. The water-soluble organic solvent is preferably at least one type of solvent selected from the group consisting of alcohols (but excluding ether alcohols), ether alcohols, and aprotic polar solvents. Examples of the alcohols include t-butanol and propylene glycol. Examples of the ether alcohols include 3-methoxymethylbutanol, dipropylene glycol, dipropylene glycol monomethyl ether, and tripropylene glycol. Examples of the aprotic polar solvents include N,N-dimethylformamide, dimethyl sulfoxide, tetrahydrofuran (hereinafter also abbreviated as "THF"), acetonitrile, acetone, 3-methoxy-N,N-dimethylpropanamide, 3-butoxy-N,N-dimethylpropanamide, 3-methoxy-3-methyl-1-butanol, triethylene glycol dimethyl ether, and tetraethylene glycol dimethyl ether. In terms of improving the compatibility between the polymer (A) and the aqueous medium and facilitating the formation of a uniform film on the article being treated, the water-soluble organic solvent in those cases where the liquid medium is an aqueous medium is preferably an ether alcohol, and is more preferably dipropylene glycol, tripropylene glycol or dipropylene glycol monomethyl ether.

In those cases where the aqueous medium contains a water-soluble organic solvent, the amount of the water-soluble organic solvent, per 100 parts by mass of water, is preferably within a range from 1 to 80 parts by mass, and more preferably from 5 to 60 parts by mass.

### (Surfactant)

The surfactant is preferably a surfactant that does not have a fluorine atom.

Examples of the surfactant include anionic surfactants, nonionic surfactants, cationic surfactants and amphoteric surfactants.

In terms of achieving superior dispersion stability of the aqueous dispersion containing the polymer (A), the surfactant is preferably a nonionic surfactant used by itself, a combination of a nonionic surfactant with either a cationic surfactant or an amphoteric surfactant, or an anionic surfactant used by itself, and is more preferably a combination of a nonionic surfactant and a cationic surfactant.

The ratio between the nonionic surfactant and the cationic surfactant (nonionic surfactant / cationic surfactant) is preferably within a range from 100/0 to 40/60 (mass ratio), and more preferably from 97/3 to 75/25 (mass ratio).

By using the specified combination of a nonionic surfactant and a cationic surfactant, the total amount of surfactant per 100 parts by mass of the polymer (A) can be reduced to 5 parts by mass or less, and therefore any adverse effects, caused by the surfactant, on the water repellency and oil repellency of an article treated with the composition of the invention can be reduced.

Examples of the nonionic surfactant include the surfactants s¹ to s⁶ disclosed in paragraphs [0067] to [0095] of Japanese Unexamined Patent Application, First Publication No. 2009-215370.

A polyoxyethylene alkyl ether is preferred as the surfactant s¹.

An acetylene glycol ethylene oxide adduct is preferred as the surfactant s².

An ethylene oxide propylene oxide polymer is preferred as the surfactant s³.

Combinations of two or more types of nonionic surfactant may also be used.

Examples of the cationic surfactant include the surfactants s⁷ disclosed in paragraphs [0096] to [0100] of Japanese Unexamined Patent Application, First Publication No. 2009-215370.

In terms of the surfactant s⁷, an ammonium salt in which at least one of the hydrogen atoms bonded to the nitrogen atom has been substituted with an alkyl group, an alkenyl group, or a polyoxyalkylene chain having a hydroxyl group at the terminal is preferred, and compounds represented by formula (6) shown below are particularly preferred.

[(R²¹)₄N⁺]·X⁻ (6)

R²¹ represents a hydrogen atom, an alkyl group of 1 to 22 carbon atoms, an alkenyl group of 2 to 22 carbon atoms, a fluoroalkyl group of 1 to 9 carbon atoms, or a polyoxyalkylene chain having a hydroxyl group at the terminal. The four R²¹ groups may be the same or different, provided all four R²¹ groups are not hydrogen atoms. X⁻ represents a counter ion.

X⁻ is preferably a chloride ion, ethyl sulfate ion or acetate ion.

Examples of the compound represented by the above formula (6) include monostearyl trimethyl ammonium chloride, monostearyl dimethyl monoethyl ammonium ethyl sulfate, mono(stearyl) monomethyl di(polyethylene glycol) ammonium chloride, monofluorohexyl trimethyl ammonium chloride, di(beef tallow alkyl) dimethyl ammonium chloride, and dimethyl mono(coconut amine) acetate.

Combinations of two or more types of cationic surfactant may also be used.

Examples of the amphoteric surfactant include the surfactants s⁸ disclosed in paragraphs [0101] to [0102] of Japanese Unexamined Patent Application, First Publication No. 2009-215370.

Combinations of two or more types of amphoteric surfactant may also be used.

In terms of having little adverse effect on the water repellency and oil repellency of an article treated with the composition of the invention, and in terms of achieving superior dispersion stability for the dispersion containing the polymer (A), the combination of surfactants is preferably a combination of a surfactant s¹, a surfactant s² and a surfactant s⁷, a combination of a surfactant s¹, a surfactant s³ and a surfactant s⁷, or a combination of a surfactant s¹, a surfactant s², surfactant s³ and a surfactant s⁷, and any of these combinations in which the surfactant s⁷ is a compound represented by the above formula (6) is particularly preferred.

### (Other Components)

Examples of other components that may be used include fluorine-containing polymers besides the polymer (A), non-fluorine-based polymers, non-fluorine-based water repellent oil repellent agents, water-soluble polymer resins (for example, hydrophilic polyesters and derivatives thereof, hydrophilic polyethylene glycols and derivatives thereof, and hydrophilic polyamines and derivatives thereof), crosslinking agents, penetrants (for example, nonionic surfactants having a left-right symmetrical structure with a central acetylene group, the DISPANOL (a registered trademark) series manufactured by NOF Corporation), colloidal silica (for example, the SNOWTEX (a registered trademark) series manufactured by Nissan Chemical Industries, Ltd., and the ADELITE series manufactured by ADEKA Corporation), antifoaming agents (for example, the OLFINE (a registered trademark) series manufactured by Nissin Chemical Industry Co., Ltd., and the FS Antifoam series manufactured by Dow Corning Toray Co., Ltd.), film-forming assistants, insecticides, fungicides, preservatives, flame retardants, antistatic agents (for example, the DELECTOL series manufactured by Meisei Chemical Works, Ltd.), anti-wrinkle agents, softeners (for example, silicone emulsions and polyethylene wax emulsions), and pH modifiers (for example, diethanolamine, triethanolamine, acetic acid and citric acid).

When the composition of the invention contains a crosslinking agent, the adhesiveness with an article can be more easily improved, and the oil repellency and laundering durability of the water repellency of the article can be more easily improved.

Isocyanate-based crosslinking agents, methylol-based crosslinking agents, carbodiimide-based crosslinking agents and oxazoline-based crosslinking agents are preferred as the crosslinking agent.

Examples of the isocyanate-based crosslinking agents include aromatic block-type isocyanate-based crosslinking agents, aliphatic block-type isocyanate-based crosslinking agents, aromatic non-block-type isocyanate-based crosslinking agents, and aliphatic non-block-type isocyanate-based crosslinking agents. The isocyanate-based crosslinking agent is preferably a water-dispersed agent that has been emulsified with a surfactant, or a self-water-dispersible agent having a hydrophilic group.

Examples of the methylol-based crosslinking agent include condensates or precondensates of urea or melamine and formaldehyde, methylol-dihydroxyethylene-urea and derivatives thereof, methylol-ethylene-urea, methylol-propylene-urea, methylol-triazone, dicyandiamide-formaldehyde condensates, methylol-carbamate, methylol-(meth)acrylamide, and polymers of these substances.

The carbodiimide-based crosslinking agents are polymers having a carbodiimide group within the molecule, and are crosslinking agents that exhibit excellent reactivity with the carboxyl groups, amino groups and active hydrogens of the article or the like.

The oxazoline-based crosslinking agents are polymers having an oxazoline group within the molecule, and are crosslinking agents that exhibit excellent reactivity with the carboxyl groups of the article or the like.

Examples of other crosslinking agent include divinylsulfone, polyamides and cationic derivatives thereof, polyamines and cationic derivatives thereof, epoxy derivatives such as diglycidylglycerol, halide derivatives such as (epoxy-2,3-propyl)trimethylammonium chloride and N-methyl-N-(epoxy-2,3-propyl)morpholinium chloride, the pyridinium salt of ethylene glycol chloromethyl ether, polyamine-polyamide-epichlorohydrin resins, polyvinyl alcohols and derivatives thereof, polyacrylamides and derivatives thereof, and glyoxal resin-based anti-wrinkle agents.

In those cases where the composition of the invention contains a methylol-based crosslinking agent or a glyoxal resin-based anti-wrinkle agent, the composition preferably also contains a catalyst as an additive. Examples of preferred catalysts include inorganic amine salts and organic amine salts. Examples of the inorganic amine salts include ammonium chloride and the like. Examples of the organic amine salts include aminoalcohol hydrochlorides and semicarbazide hydrochlorides. Specific examples of the aminoalcohol hydrochlorides include monoethanolamine hydrochloride, diethanolamine hydrochloride, triethanolamine hydrochloride, and 2-amino-2-methylpropanol hydrochloride.

### (Proportion of Each Component)

In those cases where the composition of the invention contains an aqueous medium, the amount of the aqueous medium may be selected appropriately in accordance with the desired solid mass concentration for the composition of the invention.

The solid mass concentration of the composition of the invention, immediately following production of the composition, is preferably within a range from 25 to 70% by mass, and more preferably from 30 to 60% by mass.

The solid mass concentration for the composition of the invention in those cases where the composition is used for the treatment of an article is preferably within a range from 0.1 to 7% by mass, and more preferably from 0.2 to 5% by mass.

In those cases where the composition of the invention contains a surfactant, the amount of the surfactant immediately following production of the composition is preferably within a range from 1 to 6 parts by mass per 100 parts by mass of the polymer (A).

In those cases where the composition of the invention contains a crosslinking agent, the amount of the crosslinking agent when the composition is used for treating an article is preferably within a range from 1 to 50 parts by mass per 100 parts by mass of the polymer (A).

### (Mechanism of Action)

In the composition of the invention described above, because the polymer (A) has the unit (a), an article treated with the composition of the invention exhibits excellent oil repellency. Further, because the unit (a) that forms the polymer (A) does not have an ester linkage, an article treated with the composition of the invention is resistant to any deterioration in the water repellency and oil repellency under alkaline conditions or the like.

### [Method for Producing Water Repellent Oil Repellent Agent Composition]

The composition of the invention can be produced using a method which, for example, includes polymerizing a monomer component that includes the monomer (a) and the monomer (b) in the presence of a polymerization initiator.

The monomer (a) and the monomer (b) are each as described above.

Compounds produced using conventional production methods may be used as the monomer (a) and the monomer (b). Commercially available substances may be used for those monomers that are marketed commercially.

The monomer (a) can be obtained, for example, by dehydroiodination from a compound represented by formula (1-1) shown below (hereinafter also referred to as the "compound (1-1)").

I-CH₂CH₂-[CH₂CH₂]ₚ-[CF₂CF₂]_{q}-[OCF₂CF(CF₃)]ᵣ-O-C₃F₇ (1-1)

An example of the method used for the dehydroiodination is a method in which the compound (1-1) and KOH are reacted together in methanol.

The compound (1-1) can be obtained, for example, by adding ethylene to a compound represented by formula (1-2) shown below (hereinafter also referred to as the "compound (1-2)") in an amount of (p+1) mol per 1 mol of the compound (1-2).

I-[CF₂CF₂]_{q}-[OCF₂CF(CF₃)]ᵣ-O-C₃F₇ (1-2)

An example of the method used for adding the ethylene is a method in which a prescribed amount of ethylene gas is blown into a mixture containing the compound (1-2) and a thermal radical generator under heating. Examples of the thermal radical generator include organic oxides such as (CH₃)₃COOC(=O)CH(CH₃)₂ (Luperox 80, a product name of ARKEMA Yoshitomi, Ltd.).

The compound (1-2) can be obtained, for example, by reacting a compound represented by formula (1-3) shown below (hereinafter also referred to as the "compound (1-3)") with I₂ to convert the -C(=O)F to -I, and then conducting a reaction with q mol of tetrafluoroethylene per 1 mol of the compound (1-3) in the presence of KF.

FC(=O)-CF(CF₃)-[OCF₂CF(CF₃)]ᵣ₋₁-O-C₃F₇ (1-3)

The compound (1-3) can be obtained, for example, by blowing hexafluoropropylene oxide (HFPO) represented by formula (1-4) shown below at low temperature into an aprotic solvent system of a metal fluoride such as cesium fluoride (CsF) or potassium fluoride (KF).

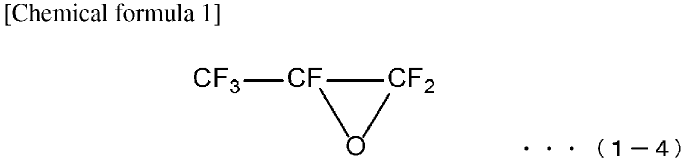

The proportion of the monomer (a) relative to the total monomer component is preferably within a range from 25 to 80% by mass, more preferably from 30 to 75% by mass, even more preferably from 34 to 74% by mass, and particularly preferably from 35 to 73% by mass. Provided the proportion of the monomer (a) is at least as large as the above lower limit, the oil repellency of an article obtained using the composition of the invention is more superior, whereas provided the proportion is not greater than the above upper limit, the conversion rate in the polymerization reaction of the polymer (A) is more likely to increase further.

The proportion of the monomer (b) relative to the total monomer component is preferably within a range from 20 to 75% by mass, more preferably from 25 to 70% by mass, even more preferably from 26 to 66% by mass, and particularly preferably from 27 to 65% by mass. Provided the proportion of the monomer (b) is at least as large as the above lower limit, the conversion rate in the polymerization reaction of the polymer (A) is more likely to increase further, whereas provided the proportion is not greater than the above upper limit, the oil repellency of an article obtained using the composition of the invention is more superior.

In those cases where at least a portion of the monomer (b) is composed of the monomer (b1), the proportion of the monomer (b1) relative to the total monomer component is preferably within a range from 20 to 75% by mass, more preferably from 25 to 70% by mass, even more preferably from 26 to 66% by mass, and particularly preferably from 27 to 65% by mass. Provided the proportion of the monomer (b1) is at least as large as the above lower limit, the conversion rate in the polymerization reaction of the polymer (A) is more likely to increase further, whereas provided the proportion is not greater than the above upper limit, the oil repellency of an article obtained using the composition of the invention is more superior.

In those cases where the monomer (b1) includes the monomer (b1-1), the proportion of the monomer (b1-1) relative to the total monomer component is preferably within a range from 1 to 70% by mass, more preferably from 1.5 to 60% by mass, even more preferably from 2 to 55% by mass, and particularly preferably from 2.5 to 50% by mass. Provided the proportion of the monomer (b1-1) is at least as large as the above lower limit, the conversion rate in the polymerization reaction is more likely to increase further, whereas provided the proportion is not greater than the above upper limit, the oil repellency and the laundering durability of the water repellency of an article obtained using the composition of the invention are more superior.

In those cases where the monomer (b1) includes the monomer (b1-2), the proportion of the monomer (b1-2) relative to the total monomer component is preferably within a range from 19 to 74% by mass, more preferably from 23.5 to 68.5% by mass, even more preferably from 24 to 64% by mass, and particularly preferably from 24.5 to 62.5% by mass. Provided the proportion of the monomer (b1-2) is at least as large as the above lower limit, the laundering durability of the water repellency of an article obtained using the composition of the invention is more superior, whereas provided the proportion is not greater than the above upper limit, crystallinity of the polymer is suppressed, and the dispersion stability of the dispersion of the polymer (A) is more superior.

In those cases where the monomer (b1) includes the monomer (b1-1) and the monomer (b1-2), the proportion of the combined total of the monomer (b1-1) and the monomer (b1-2) relative to the total monomer component is preferably within a range from 20 to 75% by mass, more preferably from 25 to 70% by mass, even more preferably from 26 to 66% by mass, and particularly preferably from 27 to 65% by mass.

In such cases, the proportion of the monomer (b1-1) relative to the total monomer component is preferably within a range from 1 to 25% by mass, more preferably from 1.5 to 20% by mass, even more preferably from 2 to 15% by mass, and particularly preferably from 2.5 to 10% by mass. Provided the proportion of the monomer (b1-1) is at least as large as the above lower limit, the conversion rate in the polymerization reaction is more likely to increase further, whereas provided the proportion is not greater than the above upper limit, the oil repellency and the laundering durability of the water repellency of an article obtained using the composition of the invention are more superior. Further, the proportion of the monomer (b1-2) relative to the total monomer component is preferably within a range from 19 to 74% by mass, more preferably from 23.5 to 68.5% by mass, even more preferably from 24 to 64% by mass, and particularly preferably from 24.5 to 62.5% by mass. Provided the proportion of the monomer (b1-2) is at least as large as the above lower limit, the laundering durability of the water repellency of an article obtained using the composition of the invention is more superior, whereas provided the proportion is not greater than the above upper limit, crystallinity of the polymer is suppressed, and the dispersion stability of the dispersion of the polymer (A) is more superior.

The above upper limits and lower limits may be arbitrarily combined as appropriate. For example, relative to the total monomer component, the proportion of the monomer (b1-1) may be within a range from 1 to 25% by mass, with the proportion of the monomer (b1-2) being within a range from 19 to 74% by mass, the proportion of the monomer (b1-1) may be within a range from 1.5 to 20% by mass, with the proportion of the monomer (b1-2) being within a range from 23.5 to 68.5% by mass, the proportion of the monomer (b1-1) may be within a range from 2 to 15% by mass, with the proportion of the monomer (b1-2) being within a range from 24 to 64% by mass, or the proportion of the monomer (b1-1) may be within a range from 2.5 to 10% by mass, with the proportion of the monomer (b1-2) being within a range from 24.5 to 62.5% by mass.

In those cases where the monomer (b1) includes the monomer (b1-3), the proportion of the monomer (b1-3) relative to the total monomer component is preferably within a range from 0.5 to 5% by mass, more preferably from 0.8 to 3% by mass, and even more preferably from 0.9 to 2% by mass. Provided the proportion of the monomer (bl-3) is at least as large as the above lower limit, the laundering durability of the water repellency of an article obtained using the composition of the invention is more superior, whereas provided the proportion is not greater than the above upper limit, the oil repellency of an article obtained using the composition of the invention is more superior.

The proportion of the monomer (b2) relative to the total monomer component is preferably less than 20% by mass, more preferably less than 10% by mass, and may be 0% by mass. Provided the proportion of the monomer (b2) is not greater than the above upper limit, an article can be obtained which is more resistant to any deterioration in the water repellency and oil repellency in the presence of alkali or the like.

The proportion of the combined total of the monomer (a) and the monomer (b1) relative to the total monomer component is preferably at least 80% by mass, more preferably at least 90% by mass, even more preferably at least 95% by mass, and may be 100% by mass. Provided this combined total is at least as large as the above lower limit, an article can be obtained which is more resistant to any deterioration in the water repellency and oil repellency in the presence of alkali or the like.

The proportion of the combined total of the monomer (a) and the monomer (b) relative to the total monomer component is preferably 100% by mass. In other words, the monomer component is preferably composed solely of the monomer (a) and the monomer (b).

Examples of the polymerization initiator include thermal polymerization initiators, photopolymerization initiators, radiation polymerization initiators, radical polymerization initiators and ionic polymerization initiators, and a radical polymerization initiator is preferred. For the radical polymerization initiator, for example, an azo-based polymerization initiator, peroxide-based polymerization initiator or redox-based polymerization initiator may be used depending on the polymerization temperature. An azo-based compound is preferred as the radical polymerization initiator, and a salt of an azo-based compound is even more desirable. The polymerization temperature is preferably within a range from 20 to 150°C.

The amount added of the polymerization initiator, per 100 parts by mass of the monomer component, is preferably within a range from 0.1 to 5 parts by mass, and more preferably from 0.1 to 3 parts by mass.

A molecular weight regulator may be used during the polymerization of the monomer component. For example, aromatic compounds, mercaptoalcohols, mercaptocarboxylic acids and alkylmercaptans are preferred as the molecular weight regulator, and a mercaptocarboxylic acid or an alkylmercaptan is particularly preferred. Specific examples of the molecular weight regulator include mercaptoethanol, mercaptopropionic acid, n-octylmercaptan, n-dodecylmercaptan, tert-dodecylmercaptan, stearylmercaptan, and α-methylstyrene dimer (CH₂=C(Ph)CH₂C(CH₃)₂Ph, wherein Ph represents a phenyl group).

The amount added of the molecular weight regulator is preferably not more than 5 parts by mass per 100 parts by mass of the monomer component, and is more preferably not more than 2 parts by mass and may be 0 parts by mass.

Examples of the method used for polymerizing the monomer component include emulsion polymerization methods, solution polymerization methods, suspension polymerization methods and bulk polymerization methods. Among these, an emulsion polymerization method is preferred. By polymerizing the monomer component using an emulsion polymerization method, the conversion rate of the monomer component to the polymer (A) can be increased, and the molecular weight (Mn, Mw) of the polymer(A) can also be increased, without using any solvent besides the aqueous medium.

In the emulsion polymerization method, the monomer component is polymerized, for example, in an emulsion containing the aqueous medium, the monomer component and the polymerization initiator. The emulsion may, if necessary, also contain a surfactant. Examples of the aqueous medium and the surfactant include the same media and surfactants as those described above.

The emulsion can be prepared by mixing the aqueous medium, the monomer component and if necessary the surfactant, dispersing the mixture using a homogenizer or high-pressure emulsifier or the like, and then adding the polymerization initiator.

The concentration of the monomer component in the emulsion is preferably within a range from 20 to 60% by mass, and more preferably from 30 to 50% by mass. Provided the concentration of the monomer component in the emulsion falls within this range, the conversion rate of the monomer component to the polymer (A) during the polymerization of the monomer component can be increased, and the molecular weight of the polymer (A) can also be increased satisfactorily.

The amount of the surfactant in the emulsion is preferably within a range from 1 to 6 parts by mass per 100 parts by mass of the monomer component. Provided the amount of the surfactant is at least as large as the above lower limit, the dispersion stability of the emulsion is excellent. Provided the amount of the surfactant is not more than the above upper limit, any adverse effects, caused by the surfactant, on the water repellency and oil repellency of an article treated with a composition containing the polymer (A) can be reduced.

The conversion rate of the monomer component into the polymer (A) at the completion of the polymerization is preferably at least 80%, and more preferably 90% or higher. By increasing the conversion rate, the molecular weight of the polymer (A) also increases, and the water repellency and oil repellency improve. Further, by ensuring a high conversion rate, any deterioration in performance caused by residual monomer can be suppressed, and the amount of fluorine atoms incorporated in the polymer (A) can be increased, meaning the water repellency and oil repellency improve. In order to ensure a conversion rate of at least 80%, the composition of the emulsion and the polymerization time are both preferably optimized.

By polymerizing the monomer component in the emulsion, a dispersion of the polymer (A) is obtained.

In this dispersion, the polymer (A) is dispersed within the aqueous medium in the form of emulsified particles.

In the dispersion, the average particle size of the emulsified particles of the polymer (A) is preferably within a range from 20 to 200 nm, more preferably from 40 to 190 nm, and even more preferably from 60 to 180 nm. Provided the average particle size is not more than the above upper limit, the water repellency of an article treated with the emulsified particles of the polymer (A) and the dispersibility of the emulsified particles of the polymer (A) are both more superior. Provided the average particle size is at least as large as the above lower limit, the emulsified particles of the polymer (A) are more stable relative to mechanical shearing.

The average particle size of the emulsified particles of the polymer (A) is calculated by cumulant method analysis from the autocorrelation function obtained by dynamic light scattering from a sample prepared by diluting the dispersion of the polymer (A) with water to obtain a solid mass concentration of 1% by mass.

The dispersion of the polymer (A) obtained by polymerizing the monomer component in the emulsion may be used, without modification, as the composition of the invention, or may be diluted with an aqueous medium to adjust the solid mass concentration to obtain the composition of the invention. Other components may also be added to the composition of the invention.

### (Fluorine-Containing Polymer Solution)

The composition of the invention may be a fluorine-containing polymer solution containing the polymer (A) and an organic solvent, but containing no surfactant.

The fluorine-containing polymer solution can be obtained by preparing a dispersion containing the polymer (A) in the manner described above, recovering the polymer (A) from the dispersion, washing the polymer (A) if necessary, and then dissolving the polymer (A) in a medium containing an organic solvent so as to achieve the desired concentration of the polymer (A).

There are no particular limitations on the recovery method used, and the conventional method described below may be employed as appropriate.

One example of the recovery method is a method in which a mixture of hexane and tert-butanol is added to the dispersion containing the polymer (A) obtained in the manner described above to precipitate the polymer (A), and a solid-liquid separation is then performed. The proportion of hexane in the mixture of hexane and tert-butanol is preferably within a range from 10 to 90% by mass.

The recovered polymer (A) may be washed with water and a protic polar solvent if necessary.

The amount of water used for washing is, for example, a mass ratio of 1- to 20-fold relative to the mass of the polymer (A). The water temperature is preferably within a range from 40 to 70°C.

From the perspective of operability, the protic polar solvent used in the washing is preferably a comparatively low-boiling point polar solvent that does not dissolve or swell the polymer (A). From the viewpoint of operability, the boiling point of the polar solvent is preferably within a range from 40 to 120°C, and more preferably from 50 to 90°C. Specific examples of the polar solvent include tert-butanol and isopropyl alcohol. Although there are no particular limitations on the temperature of the protic polar solvent, the temperature is typically within a range from 10 to 50°C. The amount used of the protic polar solvent is, for example, a mass ratio of 1- to 20-fold relative to the mass of the polymer (A).

In those cases where a mixture of water and a protic polar solvent is used in the washing process, from the viewpoint of the removability of the protic polar solvent, the mass ratio of the protic polar solvent relative to water (polar solvent/water) in the mixture is preferably within a range from 1/99 to 99/1, and more preferably from 10/90 to 90/10.

In order to wash the polymer (A), the polymer (A) may be mixed, for example, with hot water of 40 to 70°C or a protic polar solvent. The washing time is, for example, within a range from 1 to 30 minutes.

The above organic solvent refers to an organic solvent other than the water-soluble organic solvent described above. There are no particular limitations on this organic solvent, provided it is capable of dissolving the polymer (A), and examples include ketones, compounds having an amide linkage, and fluorine-containing media. Combinations of two or more of these organic solvents may also be used.

Examples of the ketones include methyl ethyl ketone and methyl isobutyl ketone.

Examples of the compounds having an amide linkage include dimethylacetamide and methylpyrrolidone.

Examples of the fluorine-containing media include 1H-tridecafluorohexane (ASAHIKLIN AC-2000 (hereinafter abbreviated as "AC-2000"), a product name of AGC Inc.), 1,1,1,2,2,3,3,4,4,5,5,6,6-tridecafluorooctane (ASAHIKLIN AC-6000 (hereinafter abbreviated as "AC-6000"), a product name of AGC Inc.), 1,1,2,2-tetrafluoro-1-(2,2,2-trifluoroethoxy)ethane (ASAHIKLIN AE-3000 (hereinafter abbreviated as "AE-3000"), a product name of AGC Inc.), dichloropentafluoropropane (ASAHIKLIN AK-225 (hereinafter abbreviated as "AK-225"), a product name of AGC Inc.), 1,1,1,2,3,4,4,5,5,5-decafluoro-3-methoxy-2-(trifluoromethyl)pentane (CYTOP CT-SOLV100E, a product name of AGC Inc.), 1-methoxynonafluorobutane (Novec 7100, a product of 3M Japan Ltd.), 1-ethoxynonafluorobutane (Novec 7200, a product of 3M Japan Ltd.), 1,1,1,2,3,3-hexafluoro-4-(1,1,2,3,3,3-hexafluoropropoxy)pentane (Novec 7600, a product of 3M Japan Ltd.), 2H,3H-perfluoropentane (Vertrel XF, a product name of Du Pont Mitsui Fluorochemicals Co., Ltd.), as well as 3,3,4,4,5,5,6,6,7,7,8,8,8-tridecafluoro-1-octanol, 4,4,5,5,6,6,7,7,8,8,9,9,9-tridecafluoro-1-nonanol, hexafluorobenzene, hexafluoro-2-propanol, 2,2,3,3,4,4,5,5-octafluoro-1-pentanol, and 1H,1H,7H-dodecafluoro-1-heptanol.

The above fluorine-containing polymer solution may also include a mixed medium formed in combination with the water-soluble organic solvent described above, provided the medium is capable of dissolving the polymer (A) and can be arbitrarily mixed with the above organic solvent.

The same organic solvents as those described above may be used as the organic solvent of this mixed media, and the fluorine-containing media and ketones described above are preferred. The fluorine-containing medium in the mixed medium is preferably AK-225, AE-3000, AC-6000 or AC-2000. The ketone is preferably methyl isobutyl ketone.

The water-soluble organic solvents described above may be used as the water-soluble organic solvent of the mixed medium, but aprotic polar solvents are preferred, and THF, acetone or N,N-dimethylformamide are particularly preferred.

The mixed medium is preferably a combination of an aforementioned fluorine-containing medium and an aprotic polar solvent, or a combination of an aforementioned fluorine-containing medium and an aforementioned ketone, and is more preferably a mixed medium of AK-225 and THF.

The proportion of the fluorine-containing medium in the mixed medium, relative to the total volume of the mixed medium, is preferably within a range from 30 to 70% by volume, and more preferably from 40 to 60% by volume. A proportion for the fluorine-containing medium in the mixed medium that falls within this range is preferred in terms of facilitating dissolution of the polymer (A). This proportion represents the value at room temperature (25±5°C).

### (Mechanism of Action)

In the method for producing the composition of the invention described above, because a monomer component containing the monomer (a) is polymerized, a composition of the present invention can be produced that is capable of producing an article having excellent oil repellency. Further, because the unit (a) does not have an ester linkage, an article treated with the composition of the invention is resistant to any deterioration in the water repellency and oil repellency under alkaline conditions or the like.

### [Article]

An article of the present invention is an article that has been treated using the composition of the invention.

Examples of the article treated using the composition of the invention include fibers, fibrous fabrics (such as fibrous woven fabrics, fibrous knitted fabrics, nonwoven fabrics and raised fabrics), fibrous products that include a fibrous fabric (including clothing such as ki wear, rainwear, coats, jackets, wind breakers, down jackets, sportswear, work clothing, uniforms and protective clothing, as well as day packs, backpacks, bags, tents and zelts), as well as glass, paper, wood, leather, synthetic leather, stone, concrete, ceramics, metals, metal oxides, ceramic industrial products, resin molded articles, porous resins, and porous fibers and the like. Porous resins can be used, for example, as filters. Examples of the materials of the porous resins include polypropylene, polyethylene terephthalate and polytetrafluoroethylene. Examples of the materials of the porous fibers include glass fibers, cellulose nanofibers, carbon fibers and cellulose acetate.

The article to be treated is preferably fibers, a fibrous fabric, or a fibrous product containing a fibrous fabric.

There are no particular limitations on the types of fibers that may be used, and examples include natural fibers such as cotton, wool, silk and cellulose, synthetic fibers such as polyester, polyamide, acrylic and aramid, chemical fibers such as rayon, viscose rayon and lyocell, mixed spun fibers of natural fibers and synthetic fibers, and mixed spun fibers of natural fibers and chemical fibers. Examples of the fibers in those cases where the fibrous substrate is a nonwoven fabric include polyethylene, polypropylene, polyolefin, polyethylene terephthalate, polytetrafluoroethylene, glass and rayon.

Although there are no particular limitations on the thickness of the fibrous fabric, the thickness is typically within a range from 0.01 to 5 mm.

Any method that enables the water repellent oil repellent agent composition to be adhered to the article to be treated may be used as the treatment method, and in those cases where the composition of the invention contains a liquid medium, examples include methods in which a dispersion of the composition of the invention is adhered to the article using a conventional coating method such as coating, impregnation, dipping, spraying, brushing, padding, size pressing or roller application, and the composition is then dried.

Although there are no particular limitations on the amount of the solid mass in the water repellent oil repellent agent composition adhered to the article to be treated, in the case of a fibrous fabric, for example, the solid mass per unit mass of the fibrous fabric is preferably within a range from 0.001 to 0.05 g/g.

The drying may be conducted at normal temperatures or under heating, and is preferably conducted under heating. When heating is used, the heating temperature is preferably within a range from 40 to 200°C. Further, in those cases where the water repellent oil repellent agent composition contains a crosslinking agent, the composition is preferably heated, if necessary, to a temperature as least as high as the crosslinking temperature in order to achieve curing.

### (Mechanism of Action)

Because an aforementioned article of the invention is treated with the composition of the invention containing the polymer (A) having the unit (a), the article exhibits excellent oil repellency. Further, because the unit (a) that constitutes part of the polymer (A) does not have an ester linkage, an article of the invention is resistant to any deterioration in the water repellency and oil repellency under alkaline conditions or the like.

### [Examples]

Hereinafter, the present invention is described in further detail using a series of examples, but the present invention is not limited to these examples. Examples 1 to 7 are examples of the invention, and examples 8 to 14 are comparative examples.

### (Composition of Fluorine-Containing Polymer)

The composition of each fluorine-containing polymer (the proportion of each monomer unit relative to all of the units that constitute the fluorine-containing polymer) (% by mass) was calculated based on the amounts added of the various monomer components.

Based on the ¹H-NMR obtained following removal of the surfactant and the solvent from the dispersion containing the fluorine-containing polymer obtained in each example, and the rate of reaction of each monomer as determined by gas chromatography of the dispersion containing the fluorine-containing polymer obtained in each example, the proportions of the various monomer units relative to the total of all the units that constitute the fluorine-containing polymer were calculated and confirmed as being consistent with the composition of the added monomers.

### (Conversion Rate)

Based on the theoretical value for the solid mass concentration of the dispersion containing the fluorine-containing polymer, calculated from the amounts added of the raw materials, and the actual measured value of the solid mass concentration of the dispersion containing the fluorine-containing polymer, the conversion rate of the monomer component into the fluorine-containing polymer was determined using the formula: actual measured value / theoretical value × 100. A conversion rate of 90% or higher was evaluated as A (good), a conversion rate of at least 80% but less than 90% was evaluated as B (fair), and a conversion rate of less than 80% was evaluated as C (poor).

### (Molecular Weight)

### <Recovery of Fluorine-Containing Polymer>

First, 6 g of the dispersion containing the fluorine-containing polymer obtained in each example was added dropwise to 60 g of a mixed solution containing 54 g of 2-butanol and 6 g of hexane, and the resulting mixture was stirred to precipitate a solid. Centrifugal separation at 3,000 rpm was conducted for 5 minutes, and the thus obtained solid was separated. Subsequently, 30 g of an isopropyl alcohol-modified alcohol (product name: 95% IPA-modified alcohol, manufactured by Imazu Chemical Co., Ltd.) and 30 g of ion-exchanged water were added to the separated solid, and the resulting mixture was stirred thoroughly. Following centrifugal separation at 3,000 rpm for 5 minutes, the obtained solid was separated from the supernatant and dried overnight under vacuum at 35°C to obtain the fluorine-containing polymer.

### <Measurement of Mn and Mw>

Each fluorine-containing polymer recovered using the method described above was dissolved in a mixed solvent of a fluorine-containing solvent (AK-225 manufactured by AGC Inc.) and tetrahydrofuran (hereinafter abbreviated as "THF") in a ratio of 6/4 (volumetric ratio), thus forming a solution with a solid mass concentration of 0.5% by mass, and this solution was then filtered through a 0.2 µm filter to obtain an analysis sample. The analysis sample was then subjected to GPC measurement to measure Mn and Mw. The measurement conditions were as follows.
Apparatus: HLC-8320GPC manufactured by Tosoh Corporation
Columns: Mixed-C column, length: 300 mm, diameter: 7.5 mm, membrane thickness: 5 µm, manufactured by Polymer Laboratories Ltd.
Mobile phase: AK-225/THF = 6/4 (volumetric ratio)
Flow rate: 1.0 mL/minute
Oven temperature: 37°C
Sample concentration: 1.0% by mass
Injection volume: 50 µL
Detector: RI
Molecular weight standards: polymethyl methacrylates (Mp = 2,136,000, 955,000, 569,000, 332,800, 121,600, 67,400, 31,110, 13,300, 7,360, 1,950, 1,010 and 550)

### (Static Contact Angle)

In accordance with JIS R 3257:1999 "Testing Method of Wettability of Glass Substrate Surfaces", liquid droplets of n-hexadecane (hereinafter abbreviated as "n-HD") were placed statically at five locations on the surface of the article, and the sessile drop method was used to measure the n-HD contact angle for each liquid droplet. The volume of each static liquid droplet was about 2 µL/droplet, and the measurements were conducted at 20°C. The n-HD contact angle was recorded as the average value of the measured values at three locations. The n-HD contact value is an indicator of the oil repellency of the article.

### (Water Repellency)

The water repellency of a produced test cloth was evaluated in accordance with the spray test of JIS L 1092:1998 using a 5-grade scale from 1 to 5. A higher grade indicates better water repellency. Grades having a +(-) appended to a numerical grade indicate a water repellency slightly better (or worse) than the numerical grade. Results recorded using a numerical range indicate a state between the grade at the upper limit of the range and the grade at the lower limit of the range. For example, an evaluation recorded using the numerical range "4-5" indicates a state between 4 points and 5 points.

### (Laundering Durability of Water Repellency)

The test piece that had been subjected to the water repellency evaluation described above was laundered repeatedly for 20 times in accordance with the laundering method of AATCC Monograph 6-2016. Following this laundering, the test piece was dried in accordance with the tumble drying method of AATCC Monograph 6-2016, and was then once again evaluated for water repellency in the manner described above.

### (Monomer (a))

PHVE-V: CH₂=CH-CF₂CF₂-OCF₂CF(CF₃)-O-CF₂CF₂CF₃ (manufactured by AGC Inc.)

### (Monomer (b))

C6OLF: CH₂=CH-(CF₂)₅-CF₃ (manufactured by Tokyo Chemical Industry Co., Ltd.)
VSt: vinyl stearate (manufactured by Tokyo Chemical Industry Co., Ltd.)
VAc: vinyl acetate (manufactured by Tokyo Chemical Industry Co., Ltd.)
EGMAE: ethylene glycol monoallyl ether (manufactured by Tokyo Chemical Industry Co., Ltd.)

### (Surfactants)

E120: a 10% by mass aqueous solution of a polyoxyethylene lauryl ether (EMULGEN 120, a product name manufactured by Kao Corporation, number of added moles of ethylene oxide: approximately 12)
E420: a polyoxyethylene oleyl ether (EMULGEN 420, a product name manufactured by Kao Corporation, number of added moles of ethylene oxide: approximately 12.8)
E430: a 10% by mass aqueous solution of a polyoxyethylene oleyl ether (EMULGEN 430, a product name manufactured by Kao Corporation, number of added moles of ethylene oxide: approximately 30)
P104: a 10% by mass aqueous solution of an ethylene oxide-propylene oxide polymer (PLONON #104, a product name manufactured by NOF Corporation, average molecular weight: 1,670, contains 40% by mass of ethylene oxide)
P204: an ethylene oxide-propylene oxide polymer (PLONON #204, a product name manufactured by NOF Corporation, average molecular weight: 3,330, contains 40% by mass of ethylene oxide)
LQ1863: a 63% by mass water/isopropyl alcohol solution of stearyl trimethyl ammonium chloride (LIPOQUAD 18-63, a product name manufactured by Lion Specialty Chemicals Co., Ltd.)
SFY485: Surfynol 485 (an acetylene glycol ethylene oxide adduct (Surfynol 485, a product name manufactured by Nissin Chemical Industry Co., Ltd., number of added moles of ethylene oxide: 30))

### (Media)

Water: ion-exchanged water
DPG: dipropylene glycol

### (Polymerization Initiator)

VA-061A: a 20% by mass aqueous solution of an acetic acid salt of 2,2'-azobis[2-(2-imidazolin-2-yl)propane] (VA-061, manufactured by FUJIFILM Wako Pure Chemical Corporation) (VA-061: acetic acid = 1:0.8 (mass ratio))

### (Examples 1 to 14)

### <Production of Dispersions Containing a Fluorine-Containing Polymer>

A glass vessel was charged with the monomers (excluding the VAc), the surfactants and the media shown in Table 1 or 2, and after heating at 55°C for 30 minutes, a homomixer (BioMixer, manufactured by NISSEI Corporation) was used to mix the contents and obtain a mixed liquid. With the thus obtained mixed liquid held at a temperature of 55°C, a high-pressure emulsifier (Mini-Lab, manufactured by APV Rannie Ltd.) was used to conduct a pre-emulsification at 10 MPa and then a treatment at 40 MPa, thus obtaining an emulsion. The thus obtained emulsion was placed in a stainless steel reactor and cooled to a temperature of 30°C or lower. The polymerization initiator shown in Table 1 or 2 was then added, and after substituting the gas phase inside the reactor with nitrogen, an amount of VAc shown in Table 1 or 2 was introduced, and a polymerization was conducted under stirring at 55°C for 24 hours, thus obtaining a dispersion containing a fluorine-containing polymer. The conversion rate of the monomers into the fluorine-containing polymer, the solid mass concentration of the dispersion, and the Mn and Mw values of the fluorine-containing polymer in the dispersion are shown in Table 1 or 2. In Tables 1 and 2, the amounts added (g) of the surfactants and the polymerization initiator represent total amounts that include the mass of the medium.

**[Table 1]**

| | | | Molecular weight | Concentration | Example 1 | Example 2 | Example 3 | Example 4 | Example 5 | Example 6 | Example 7 |
|---|---|---|---|---|---|---|---|---|---|---|---|
| Amount added (g) | Monomers | PHVE-V | 478.1 | - | 9.6 | 10.2 | 9.6 | 11.8 | 18.2 | 19.8 | 13.7 |
| | | C6OLF | 346.09 | - | - | - | - | - | - | - | - |
| | | VAc | 86.09 | - | 1.4 | 0.7 | 0.7 | 1.4 | 9.1 | 7.5 | 13.7 |
| | | VSt | 310.52 | - | 16.1 | 16.1 | 16.8 | 13.8 | - | - | - |
| | | EGMAE | 102.13 | - | 0.3 | 0.3 | 0.3 | 0.3 | - | - | - |
| | Media | Water | - | - | 40.2 | 40.2 | 40.2 | 40.2 | 40.2 | 40.2 | 40.2 |
| | | DPG | - | - | 6.8 | 6.8 | 6.8 | 6.8 | 6.8 | 6.8 | 6.8 |
| | Emulsifiers | E120 | - | 10% | - | - | - | - | - | - | - |
| | | E430 | - | 10% | - | - | - | - | - | - | - |
| | | E420 | - | 100% | 0.6 | 0.6 | 0.6 | 0.6 | 0.6 | 0.6 | 0.6 |
| | | P104 | - | 10% | - | - | - | - | - | - | - |
| | | P204 | - | 100% | 0.3 | 0.3 | 0.3 | 0.3 | 0.3 | 0.3 | 0.3 |
| | | SFY485 | - | 100% | 0.6 | 0.6 | 0.6 | 0.6 | 0.6 | 0.6 | 0.6 |
| | | LQ1863 | - | 63% | 0.2 | 0.2 | 0.2 | 0.2 | 0.2 | 0.2 | 0.2 |
| | Initiator | VA-061A | - | 20% | 4.1 | 4.1 | 4.1 | 4.1 | 4.1 | 4.1 | 4.1 |
| Conversion rate | | | | | A | A | A | A | A | A | A |
| Solid mass concentration (%) | | | | | 32.6 | 28.8 | 30.6 | 26.9 | 33.1 | 32.0 | 32.9 |
| Molecular weight | | | Mn | | 16,000 | 14,000 | 18,000 | 12,000 | 20,000 | 15,000 | 17,000 |
| | | | Mw | | 27,000 | 32,000 | 25,000 | 29,000 | 50,000 | 48,000 | 39,000 |

**[Table 2]**

| | | | Molecular weight | Concentration | Example 8 | Example 9 | Example 10 | Example 11 | Example 12 | Example 13 | Example 14 |
|---|---|---|---|---|---|---|---|---|---|---|---|
| Amount added (g) | Monomers | PHVE-V | 478.1 | - | - | - | - | - | - | - | - |
| | | C6OLF | 346.09 | - | 103.8 | 9.6 | 97.3 | 90.9 | 18.2 | 130.0 | 142.0 |
| | | VAc | 86.09 | - | 26.0 | 1.4 | 6.5 | 6.5 | 9.1 | 65.0 | 54.0 |
| | | VSt | 310.52 | - | 127.4 | 16.1 | 153.2 | 159.6 | - | - | - |
| | | EGMAE | 102.13 | - | 2.4 | 0.3 | 2.6 | 2.6 | - | - | - |
| | Media | Water | - | - | 355.4 | 40.2 | 355.4 | 355.4 | 40.2 | 119.0 | 130.0 |
| | | DPG | - | - | 64.9 | 6.8 | 64.9 | 64.9 | 6.8 | 34.0 | 39.0 |
| | Emulsifiers | E120 | - | 10% | - | - | - | - | - | - | 15.0 |
| | | E430 | - | 10% | 77.9 | - | 77.9 | 77.9 | - | 19.0 | - |
| | | E420 | - | 100% | - | 0.6 | - | - | 1.2 | - | - |
| | | P104 | - | 10% | - | - | - | - | - | - | 10.0 |
| | | P204 | - | 100% | 1.3 | 0.3 | 1.3 | 1.3 | 0.6 | 10.0 | - |
| | | SFY485 | - | 100% | - | 0.6 | - | - | 1.2 | - | - |
| | | LQ1863 | - | 63% | 2.1 | 0.2 | 2.1 | 2.1 | 0.5 | 4.9 | - |
| | Initiator | VA-061A | - | 20% | 38.9 | 9.2 | 38.9 | 38.9 | 9.2 | 19.6 | 19.6 |
| Conversion rate | | | | | A | A | A | A | A | A | A |
| Solid mass concentration (%) | | | | | 33.9 | 31.9 | 33.5 | 33.8 | 33.2 | 49.9 | 48.9 |
| Molecular weight | | | Mn | | 16,000 | 14,000 | 20,000 | 19,000 | 18,000 | 17,000 | 18,000 |
| | | | Mw | | 35,000 | 29,000 | 34,000 | 37,000 | 30,000 | 38,000 | 40,000 |

### <Preparation of Article for Evaluation of Static Contact Angle>

Each of the dispersions containing a fluorine-containing polymer of Examples 1 to 14 produced in the manner described above was diluted with distilled water to adjust the solid mass concentration to 2.0% by mass, thus obtaining a water repellent oil repellent agent composition. This water repellent oil repellent agent composition was applied to the surface of a glass substrate (ASLAB Super Grade Microscope Slide, a product name of THICK Co., Ltd., length: 25 mm, width: 75 mm, thickness: 1.0 to 1.2 mm) using a dip coater (device name: F255), by moving the coater three times back and forth across the surface at a speed of 0.5 mm/second, and the applied composition was then dried at 200°C for 10 minutes to complete preparation of an article for evaluating the static contact angle.

Using the evaluation method described above, the static contact angle was evaluated for each of these prepared articles. The evaluation results are shown in Tables 3 and 4.

**[Table 3]**

| | | | Example 1 | Example 2 | Example 3 | Example 4 | Example 5 | Example 6 | Example 7 |
|---|---|---|---|---|---|---|---|---|---|
| Composition of fluorine-containing polymer (wt%) | PHVE-V | | 35.0 | 37.5 | 35.0 | 43.0 | 66.7 | 72.4 | 50.0 |
| | C6OLF | | - | - | - | - | - | - | - |
| | VAc | | 5.0 | 2.5 | 2.5 | 5.0 | 33.3 | 27.6 | 50.0 |
| | VSt | | 59.0 | 59.0 | 61.5 | 51.0 | - | - | - |
| | EGMAE | | 1.0 | 1.0 | 1.0 | 1.0 | - | - | - |
| Static contact angle (°) | | n-HD | 68.3 | 65.9 | 67.5 | 65.3 | 69.4 | 69.1 | 66.8 |

**[Table 4]**

| | | | Example 8 | Example 9 | Example 10 | Example 11 | Example 12 | Example 13 | Example 14 |
|---|---|---|---|---|---|---|---|---|---|
| Composition of fluorine-containing polymer (wt%) | PHVE-V | | - | - | - | - | - | - | - |
| | C6OLF | | 40.0 | 35.0 | 37.5 | 35.0 | 66.7 | 66.7 | 72.4 |
| | VAc | | 10.0 | 5.0 | 2.5 | 2.5 | 33.3 | 33.3 | 27.6 |
| | VSt | | 49.1 | 59.0 | 59.0 | 61.5 | - | - | - |
| | EGMAE | | 0.9 | 1.0 | 1.0 | 1.0 | - | - | - |
| Static contact angle (°) | | n-HD | 63.8 | 61.4 | 62.4 | 61.8 | 61.2 | 58.1 | 61.6 |

### <Preparation of Test Cloth for Evaluation of Water Repellency and Laundering Durability Thereof>

Each of the dispersions containing a fluorine-containing polymer of Examples 1 to 3 and Examples 10 and 11 produced in the manner described above was diluted with tap water to adjust the final solid mass concentration (FC) to either 1.0% by mass or 2.0% by mass, and an isocyanate-based crosslinking agent (MEIKANATE TP-10, manufactured by Meisei Chemical Works, Ltd.) was added in sufficient amount to achieve a concentration of 1.0% by mass, thus obtaining a water repellent oil repellent agent composition.

A polyethylene terephthalate (PET) taffeta was dipped in the thus obtained water repellent oil repellent agent composition, and the taffeta was then wrung out to achieve a wet pick up of 60 to 65% by mass of the PET taffeta. The taffeta was then heated at 110°C for 90 seconds, and then dried at 170°C for 60 seconds, before being left to stand overnight in a room at 23°C and 50% humidity, thus completing preparation of a test cloth.

Using the evaluation methods described above, the test cloth was evaluated for water repellency (the water repellency prior to laundering, hereinafter also referred to as "Initial") and the laundering durability of the water repellency (the water repellency after 20 laundering repetitions, hereinafter also referred to as "HL20"). The results are shown in Table 5.

**[Table 5]**

| | | | | Example 1 | Example 2 | Example 3 | Example 10 | Example 11 |
|---|---|---|---|---|---|---|---|---|
| Fluorine-containing Polymer Composition (wt%) | | PHVE-V | | 35.0 | 37.5 | 35.0 | - | - |
| | | C6OLF | | - | - | - | 37.5 | 35.0 |
| | | VAc | | 5.0 | 2.5 | 2.5 | 2.5 | 2.5 |
| | | VSt | | 59.0 | 59.0 | 61.5 | 59.0 | 61.5 |
| | | EGMAE | | 1.0 | 1.0 | 1.0 | 1.0 | 1.0 |
| | | Monomer b total | | 65.0 | 62.5 | 65.0 | 100.0 | 100.0 |
| Water repellency | FC 1% | Initial | repellency | 4 | 4-5 | 4-5 | 3 | 4 |
| | | | wettability | 5 | 5 | 5 | 4 | 5 |
| | | HL20 (air dried) | repellency | 3 | 1-2 | 2 | 1-2 | 1-2 |
| | | | wettability | 4 | 3 | 3 | 1 | 1 |
| | FC 2% | Initial | repellency | 4-5 | 5 | 4-5 | 3-4 | 4 |
| | | | wettability | 5 | 5 | 5 | 5- | 5 |
| | | HL20 (air dried) | repellency | 2 | 2 | 2 | 1-2 | 1-2 |
| | | | wettability | 3 | 3 | 3 | 1- | 1 |
| Static contact angle (°) | | n-HD | | 68.3 | 65.9 | 67.5 | 62.4 | 61.8 |

The articles of Examples 1 to 7, which had been treated using a composition containing a fluorine-containing polymer that contained both the unit (a) and the unit (b), each exhibited an n-HD static contact angle of 65° or higher, confirming excellent oil repellency. In contrast, the articles 8 to 14, which had been treated using a composition containing a fluorine-containing polymer that contained only the unit (b) and did not contain the unit (a), exhibited inferior oil repellency.

Further, comparison of Examples 1 to 3, 10 and 11 revealed that in terms of HL20, although the result for repellency in Example 2 when the solid mass concentration was 1.0% by mass was similar to that of Examples 10 and 11, all of the other results for Examples 1 to 3 were higher grades than those observed for Examples 10 and 11, indicating superior laundering durability of the water repellency. Further, the water repellency (Initial) was also similar or superior to that of Examples 10 and 11.

### [Industrial Applicability]

The present invention is able to provide a water repellent oil repellent agent composition capable of producing an article having excellent oil repellency, a method for producing the composition, and an article having excellent oil repellency.

All of the content within the description, claims and abstract of prior Japanese Patent Application No. 2020-190220, filed November 16, 2020 is referenced herein, and incorporated within the disclosure of the present invention.

## Claims

1. A water repellent oil repellent agent composition containing a fluorine-containing polymer comprising a unit based on a monomer (a) shown below and a unit based on a monomer (b) shown below:
monomer (a): a compound represented by formula (1) shown below:
CH₂=CH-[CH₂CH₂]ₚ-[CF₂CF₂]_{q}-[OCF₂CF(CF₃)]ᵣ-O-C₃F₇ (1)
wherein p represents an integer of 0 to 4, q represents an integer of 1 to 4, and r represents an integer of 1 to 4;
monomer (b): another monomer that is copolymerizable with the monomer (a).

2. The water repellent oil repellent agent composition according to Claim 1, wherein the unit based on the monomer (b) includes a unit based on a monomer (b1) shown below:
monomer (bl): a compound with a molecular weight of 45 to 350, represented by formula (2) or formula (3) shown below:
CH₂=CH-Q (2)
CH₂=CHCH₂-Q (3)
wherein Q represents a halogen atom, or an organic group in which a bonding terminal atom bonded to CH₂=CH- or CH₂=CHCH₂- is an oxygen atom, a nitrogen atom, or a sulfur atom.

3. The water repellent oil repellent agent composition according to Claim 2, wherein the monomer (bl) is a vinyl carboxylate ester, allyl carboxylate ester, alkyl vinyl ether, alkyl allyl ether, hydroxyalkyl vinyl ether, hydroxyalkyl allyl ether, vinyl halide, or allyl halide.

4. The water repellent oil repellent agent composition according to Claim 2 or 3, wherein the unit based on the monomer (bl) includes a unit based on a vinyl carboxylate ester having an alkyl group of 1 to 8 carbon atoms.

5. The water repellent oil repellent agent composition according to Claim 4, wherein a proportion of the unit based on the vinyl carboxylate ester having an alkyl group of 1 to 8 carbon atoms, relative to all units that constitute the fluorine-containing polymer, is within a range from 1 to 70% by mass.

6. The water repellent oil repellent agent composition according to any one of Claims 2 to 5, wherein the unit based on the monomer (b1) includes a unit based on a vinyl carboxylate ester having an alkyl group of 12 to 30 carbon atoms.

7. The water repellent oil repellent agent composition according to any one of Claims 2 to 6, wherein
the unit based on the monomer (bl) includes a unit based on a vinyl carboxylate ester having an alkyl group of 1 to 8 carbon atoms, and a unit based on a vinyl carboxylate ester having an alkyl group of 12 to 30 carbon atoms, and
relative to all units that constitute the fluorine-containing polymer, a proportion of the unit based on the vinyl carboxylate ester having an alkyl group of 1 to 8 carbon atoms is within a range from 1 to 25% by mass, and a proportion of the unit based on the vinyl carboxylate ester having an alkyl group of 12 to 30 carbon atoms is within a range from 19 to 74% by mass.

8. The water repellent oil repellent agent composition according to any one of Claims 1 to 7, wherein a proportion of the unit based on the monomer (a), relative to all units that constitute the fluorine-containing polymer, is within a range from 25 to 80% by mass.

9. A method for producing a water repellent oil repellent agent composition, the method including polymerizing a monomer component containing a monomer (a) described below and a monomer (b) described below in presence of a polymerization initiator:
monomer (a): a compound represented by formula (1) shown below:
CH₂=CH-[CH₂CH₂]ₚ-[CF₂CF₂]_{q}-[OCF₂CF(CF₃)]ᵣ-O-C₃F₇ (1)
wherein p represents an integer of 0 to 4, q represents an integer of 1 to 4, and r represents an integer of 1 to 4;
monomer (b): another monomer that is copolymerizable with the monomer (a).

10. The method for producing a water repellent oil repellent agent composition according to Claim 9, wherein a proportion of the monomer (a) relative to an entire monomer component is within a range from 25 to 80% by mass.

11. An article that has been treated with the water repellent oil repellent agent composition according to any one of Claims 1 to 8.
